# EUROPEAN PATENT APPLICATION

(11) **EP 1 529 583 A1**
(43) Date of publication of application: **11.05.2005**
(21) Application number: 03762891.4
(22) Date of filing: 07.07.2003
(51) Int. Cl.: B22F 1/00, C22C 27/02, H01G 9/042

(54) **NIOBIUM POWDER, ANODE FOR SOLID ELECTROLYTIC CAPACITOR AND SOLID ELECTROLYTIC CAPACITOR**

(30) Priority: 08.07.2002 JP 2002198320
(71) Applicant: JFE Mineral Company, Ltd., Tokyo 100-0005 (JP)
(72) Inventor: KIRIHARA, Tadasu, JFE MINERAL COMPANY, LTD., Chiba-shi, Chiba 260-0826 (JP); SATO, Nobuyuki, JFE MINERAL COMPANY, LTD., Chiba-shi, Chiba 260-0826 (JP); EBATO, Osamu, JFE MINERAL COMPANY, LTD., Chiba-shi, Chiba 260-0826 (JP); SAITO, Kan, JFE MINERAL COMPANY, LTD., Chiba-shi, Chiba 260-0826 (JP)
(74) Representative: Grünecker, Kinkeldey, Stockmair & Schwanhäusser Anwaltssozietät
(86) International application number: PCT/JP2003/008602
(87) International publication number: WO 2004/004952

(57) **Abstract**

There is provided a niobium powder to make a capacitor which is small leakage current, also limited leakage current even after application of thermal load, and high capacitance which is attained by enhancing the thermal stability of the niobium oxide coating film in the capacitor. The niobium powder includes at least one or more selected from molybdenum: 0.002 to 20% by mass, chromium: 0.002 to 10% by mass, and tungsten: 0.002 to 20% by mass; and hydrogen: 0.005 to 10% by mass, and the specific surface area of the powder is 1 to 10 m²/g. It is preferable that the niobium powder further includes magnesium: 0.002 to 1% by mass and aluminum: 0.002 to 1% by mass, and the average particle size of the secondary particles of the niobium powder is from 10 to 200 µm.

## Description

### Technical Field

The present invention relates to a niobium powder, an anode formed by using the powder, for use in a solid electrolytic capacitor, and a solid electrolytic capacitor formed by using the powder.

### Background Art

Although tantalum powder has hitherto been used for electrolytic capacitors, there has been a problem that tantalum is small in production and the supply price of tantalum is unstable. In these years, a trend of using niobium, abundant in amount of deposit and low in supply price, for anodes of electrolytic capacitors has been accelerated. However, electrolytic capacitors using niobium have several drawbacks in comparison with those using tantalum. A primary problem is that the niobium oxide coating film is poor in thermal stability. This causes a problem that the quality is degraded owing to the thermal load applied at the time when the capacitor is mounted as a component, and leakage current is thereby increased.

For the purpose of reducing the leakage current, techniques including a technique of adding nitrogen are available (see for example, the Non-Patent Document 1). However, these techniques have not been able to be measures that improve the thermal stability.

There has hitherto been available a technique which prepares a niobium powder by reducing niobium pentachloride with hydrogen. In this case, the hydrogen remaining in the niobium powder reaches even a content of 0. 7 to 0.8 % by mass. As a powder for use in electrolytic capacitors, the niobium powder brings slightly poor electrostatic capacitance, large leakage current and huge leakage current after application of a thermal load. In this regard, the present inventors have previously provided a niobium powder which contains 1 to 600 ppm of hydrogen and the balance is substantially niobium (see for example, Patent Document 1). Such a niobium is a powder obtained by subjecting the above niobium powder that is prepared by reducing niobium pentachloride with hydrogen, to a thermal treatment, for example, at a temperature of about 1000°C or higher in an atmosphere of Ar. When such a niobium powder is used as an anode of a solid electrolytic capacitor, the capacitor is large in electrostatic capacitance, small in leakage current, and accordingly excellent.

A solid electrolyte capacitor has a structure in which niobium, niobium oxide, a solid electrolyte, graphite, silver and the like are laminated one over another. The solid electrolyte capacitor is fabricated as follows: a niobium powder is sintered at 1000 to 1400°C to produce a porous sintered body, thereafter the porous sintered body is subjected to chemical conversion treatment to form niobium oxide on the surface of the niobium; subsequently the solid electrolyte layer, the graphite layer and the silver layer are formed; and finally, external terminals are connected.
[Non-patent Document 1] "Metal, vol. 72 (2002), No. 3," (p 221).
[Patent Document 1] Specification of Japanese Patent Application No. 2002-11824.

### Disclosure of the Invention

The present invention provides a further improved technique described in Patent Document 1. An object of the present invention is the provision of a niobium powder to be used for manufacturing capacitors small in leakage current, small in degradation of leakage current after application of a thermal load, and high in capacitance by enhancing the thermal stability of the oxide coating film of niobium capacitors. Further, another object of the present invention is the provision of anodes, using this niobium powder, for use in solid electrolytic capacitors and solid electrolytic capacitors using this niobium powder.

The present invention provides a niobium powder characterized in that the niobium powder includes at least one selected from molybdenum: 0.002 to 20% by mass, chromium: 0.002 to 10% by mass, and tungsten: 0.002 to 20% by mass; and hydrogen: 0.005 to 0.10% by mass, the balance substantially being niobium, and that the specific surface area of the niobium powder is from 1 to 10 m²/g.

It is found that the electrostatic capacitance is enhanced and the leakage current is lowered by limiting the content of hydrogen in the niobium powder and adding one or more of molybdenum, chromium and tungsten in appropriate contents. The content of hydrogen is appropriately in a range from 0.005 to 0.10% by mass; if the content of hydrogen is either above or below this range, improvement of the electrostatic capacitance and lowering of the leakage current are not found. None of molybdenum, chromium and tungsten is effective when the content thereof is less than 0.002% by mass; when the content of molybdenum or tungsten each exceeds 20% by mass, and when the content of chromium exceeds 10% by mass, the effect is saturated and no further improvement can be found. Molybdenum, chromium and tungsten may be contained each alone or in a combination of two or more thereof. When specific surface area of the niobium powder is either less than 1 m²/g or larger than 10 m²/g, the capacitance of a capacitor is lowered, and accordingly, the specific surface area of the niobium powder is set at 1 to 10 m²/g.

Moreover, the thermal stability of the niobium oxide coating film is improved when the above described niobium powder contains magnesium: 0.002 to 1% by mass and/or aluminum: 0.002 to 1% by mass.

Additionally, the above described effect of the above described niobium powder is remarkable in powders small in primary particle size; it is preferable that the average particle size of the secondary particles is 10 to 200 µm, which makes it possible to obtain a niobium powder for use in electrolytic capacitors that simultaneously has high capacitance and low leakage current. Moreover, by regulating the average of the secondary particle sizes so as to be 10 to 200 µm, the moldability can be maintained even when the primary particles are fine particles. Additionally, a niobium powder with the content of hydrogen controlled to an appropriate value makes the boundaries between the secondary particles disappear after pressing and inhibits the edge break of molded bodies. Accordingly, such a niobium powder can improve the moldability as compared to a niobium powder without added hydrogen.

By use of any one of these niobium powders as a raw material, a sintered body is formed as an anode in the interior of a capacitor. A solid electrolytic capacitor in which such an anode is formed comes to have excellent performances in electrostatic capacitance and leakage current properties.

The present invention has made it possible to stabilize the oxide coating film which is important in manufactured capacitors by adding specific components to niobium powders. Consequently, such capacitors can prevent the property degradation caused by mounting as components (reflowing), and additionally, can sufficiently withstand the application of lead-free solder in consideration of environmental issues. Moreover, the stabilization of the coating film has made it possible to manufacture niobium capacitors low in leakage current, high in capacitance and excellent in properties.

### Best Mode for Carrying Out the Invention

Preparation of the niobium powders can be carried out by means of a CVD apparatus and the like. A mixture of niobium pentachloride with molybdenum chloride, chromium chloride and tungsten chloride is used as a raw material, and a niobium powder is produced by reducing the mixture with hydrogen. The primary particle size can be controlled to an appropriate diameter by controlling the residence time, the temperature and the like of the raw materials. Further, by carrying out a thermal treatment at about 1000°C in an atmosphere of a non-hydrogen gas such as argon, the secondary particle size and the hydrogen concentration are controlled. An electrolytic capacitor using this niobium powder is excellent in electrostatic capacitance properties and small in leakage current and in the leakage current after application of a thermal load.

Additionally, in the preparation method of a niobium powder, by further adding as raw materials metallic magnesium and metallic aluminum into the interior of the reaction furnace, there can be obtained a niobium powder for use in electrolytic capacitors further smaller in leakage current and in the leakage current after application of a thermal load.

By use of the niobium powders produced as described above, electrolytic capacitors were fabricated as below and the electrostatic capacitance and the leakage current of each of the capacitors were measured. A piece of niobium wire of 0.3 mm in diameter to be used for the anode was embedded in a 0.1 g mass of the niobium powder, and the mass of the niobium powder was subjected to press molding to a bulk density of 3000 kg/m³. The pellet thus produced was sintered at 1100 to 1400°C in an atmosphere having an internal pressure of the furnace of 1 × 10⁻³ Pa. The sintered pellet was immersed in a 0.8% by mass aqueous solution of phosphoric acid, a voltage of 20 V was applied for 4 hours to form a chemically converted film on the surface of the niobium, and thus a niobium capacitor as a sample was obtained. Thereafter, in a 40% by mass aqueous solution of sulfuric acid, the capacitance and the leakage current of the niobium capacitor were measured. The leakage current was measured as a value after application of a voltage of 14 V for 5 minutes, and the capacitance was measured as a value at 120 Hz under a condition of an applied bias of 1.5 V.

### [Examples]

Specific examples of the present invention will be described below with reference to Examples.

### [Examples 1 to 5, Comparative Examples 1 to 6]

In the preparation of niobium powders by hydrogen reduction of niobium pentachloride, the components in the niobium powders were varied by varying the addition amounts of molybdenum chloride, chromium chloride, tungsten chloride, metallic aluminum and metallic magnesium. Pellets were fabricated by use of these niobium powders, and then were subjected to the above described treatments. The capacitance and the leakage current (the values under the heading of no thermal load in Table 1) of each of the capacitors thus obtained were measured. The results thus obtained are shown in Table 1.

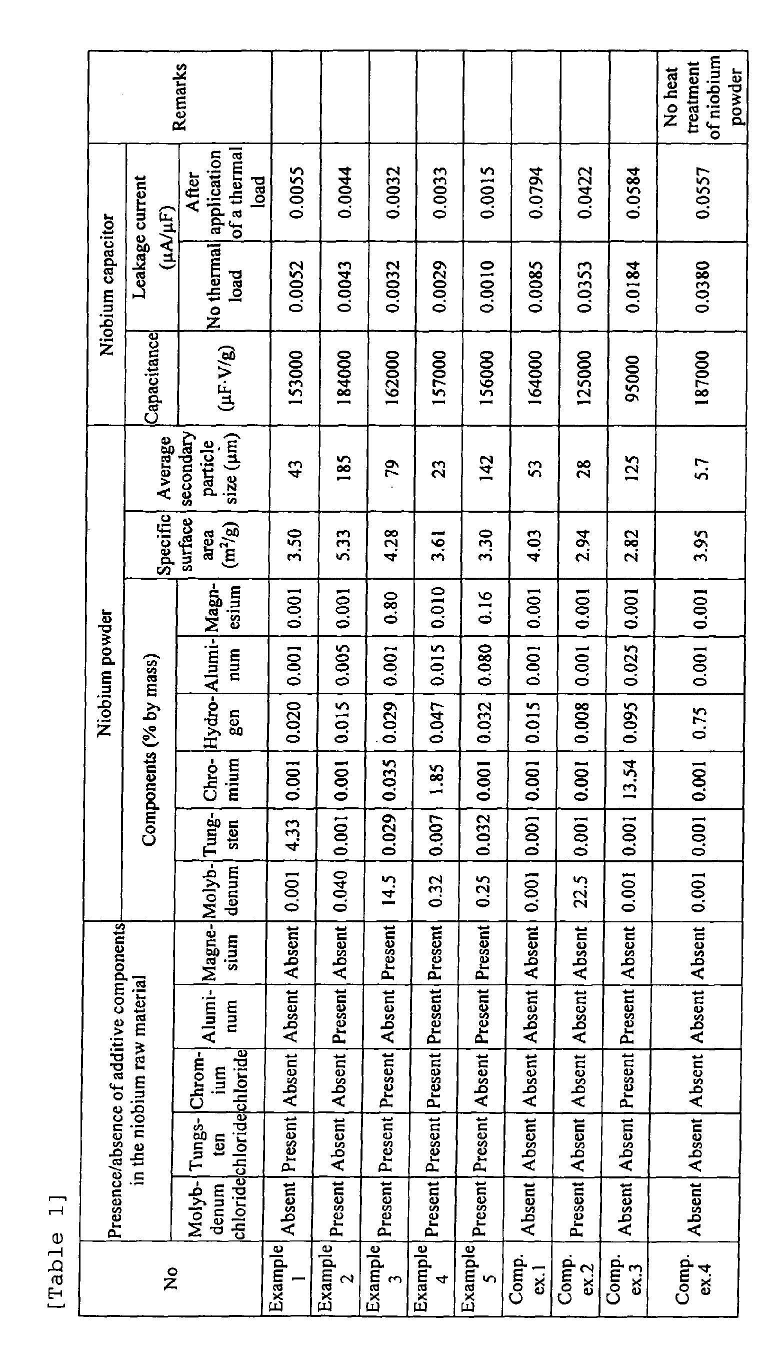

The contents of hydrogen in the niobium powders were measured by means of a thermal conductivity method. The content of molybdenum, the content of tungsten, the content of aluminum, and the content of magnesium in each of the niobium powders were measured by means of the ICP method after pyrolysis in a water bath subsequent to addition of hydrofluoric acid and nitric acid to the niobium powders, and the content of chromium in each of the niobium powders was measured by means of the ICP method after pyrolysis in a water bath subsequent to addition of hydrofluoric acid and sulfuric acid to the niobium powders.

The specific surface areas of the niobium powders were measured by means of the BET method. Moreover, the D₅₀ values of the niobium powders were measured by use of a laser particle size distribution analyzer, and the D₅₀ values thus obtained were taken as the secondary particle sizes.

As shown in Table 1, in the cases where were used the niobium powders containing at least one selected from molybdenum: 0.002 to 20% by mass, chromium: 0.002 to 10% by mass, and tungsten: 0.002 to 20% by mass; and hydrogen: 0.005 to 0.10% by mass, there were able to be fabricated excellent capacitors large in electrostatic capacitance and low in leakage current.

Moreover, in the cases where were used the niobium powders containing aluminum and magnesium in appropriate contents, there were able to be fabricated capacitors large in electrostatic capacitance and further lower in leakage current.

The samples fabricated as described above and subjected to chemical conversion treatment were then allowed to stand for one hour in a drying furnace heated to 150°C, and thereafter, the leakage currents thereof (the values under the heading of after application of a thermal load in Table 1) were measured. The results obtained are also shown in Table 1. Although in the samples not containing molybdenum, chromium and tungsten, the average of the leakage currents after heating is increased by a factor of about 15 as compared to that before heating, the samples using the niobium powders of the present invention each did not exhibit such a large difference between before and after heating.

## Claims

1. A niobium powder **characterized in that** the niobium powder comprises:
at least one selected from
molybdenum: 0.002 to 20% by mass,
chromium: 0.002 to 10% by mass, and
tungsten: 0.002 to 20% by mass; and
hydrogen: 0.005 to 10% by mass,
the balance substantially being niobium, and that
the specific surface area of the powder is from 1 to 10 m²/g.

2. The niobium powder according to claim 1, **characterized in that** the niobium powder further comprises:
magnesium: 0.002 to 1% by mass and/or
aluminum: 0.002 to 1% by mass.

3. The niobium powder according to claim 1, **characterized in that** the average particle size of the secondary particles of the powder is from 10 to 200 µm.

4. An anode for use in a solid electrolytic capacitor,
**characterized in that** the anode is a sintered body made using the niobium powder according to claim 1 as a raw material of the body.

5. A solid electrolytic capacitor **characterized in that** the solid electrolytic capacitor is made by providing a sintered body as an anode in the interior of the capacitor, wherein the niobium powder according to claim 1 is used as a raw material of the body.

6. The niobium powder according to claim 2, **characterized in that** the average particle size of the secondary particles of the powder is from 10 to 200 µm.

7. An anode for use in a solid electrolytic capacitor,
**characterized in that** the anode is a sintered body made using the niobium powder according to claim 2 as a raw material of the body.

8. A solid electrolytic capacitor **characterized in that** the solid electrolytic capacitor is made by providing a sintered body as an anode in the interior of the capacitor, wherein the niobium powder according to claim 2 is used as a raw material of the body.

9. An anode for use in a solid electrolytic capacitor,
**characterized in that** the anode is a sintered body made using the niobium powder according to claim 3 as a raw material of the body.

10. A solid electrolytic capacitor **characterized in that** the solid electrolytic capacitor is made by providing a sintered body as an anode in the interior of the capacitor, wherein the niobium powder according to claim 3 is used as a raw material of the body.

11. An anode for use in a solid electrolytic capacitor,
**characterized in that** the anode is a sintered body made using the niobium powder according to claim 6 as a raw material of the body.

12. A solid electrolytic capacitor **characterized in that** the solid electrolytic capacitor is made by providing a sintered body as an anode in the interior of the capacitor, wherein the niobium powder according to claim 6 is used as a raw material of the body.
